(19) Europäisches Patentamt
European Patent Office
Office européen des brevets

(11) **EP 1 379 419 B1**

(12) **EUROPÄISCHE PATENTSCHRIFT**

(45) Veröffentlichungstag und Bekanntmachung des Hinweises auf die Patenterteilung:
**22.02.2012 Patentblatt 2012/08**

(21) Anmeldenummer: **02727514.8**

(22) Anmeldetag: **02.04.2002**

(51) Int Cl.:
*B60T 8/1755* (2006.01)      *B60T 8/17* (2006.01)

(86) Internationale Anmeldenummer:
**PCT/EP2002/003602**

(87) Internationale Veröffentlichungsnummer:
**WO 2002/083471 (24.10.2002 Gazette 2002/43)**

(54) **VERFAHREN ZUR VERBESSERUNG DES REGELVERHALTENS EINES BLOCKIERSCHUTZREGELUNGSSYSTEMS**

ELECTRONICALLY PROGRAMMABLE METHOD FOR IMPROVING THE CONTROL BEHAVIOUR OF AN ANTI-LOCK BRAKING CONTROL SYSTEM

PROCEDE PROGRAMMABLE ELECTRONIQUEMENT PERMETTANT D'AMELIORER LE COMPORTEMENT DU REGLAGE D'UN SYSTEME DE REGLAGE DE FREINAGE ANTIBLOCAGE

(84) Benannte Vertragsstaaten:
**DE FR IT**

(30) Priorität: **10.04.2001 DE 10117997**
**26.02.2002 DE 10208125**

(43) Veröffentlichungstag der Anmeldung:
**14.01.2004 Patentblatt 2004/03**

(73) Patentinhaber: **Continental Teves AG & Co. oHG 60488 Frankfurt (DE)**

(72) Erfinder:
• **BURKHARD, Dieter**
**55411 Bingen-Büdelheim (DE)**
• **MAHLO, Rüdiger**
**61462 Königstein (DE)**
• **KALFF, Matthias**
**65527 Niedernhausen (DE)**

(56) Entgegenhaltungen:
**DE-A- 19 707 106     US-A- 5 341 297**

**Beschreibung**

Stand der Technik

Die Erfindung betrifft ein Verfahren zur Verbesserung eines Blockierschutzregelungssystems, insbesondere zur Verbesserung der Fahrstabilität beim Einbremsen auf seitenweise unterschiedlichen Kraftschlußbeiwerten.

Bei grundsätzlich bekannten Regelverfahren wird das Raddrehverhalten gemessen und zur Ermittlung des Radschlupfs und zur Bremsdruckmodulation herangezogen. Bei radindividueller Regelung (Individualregelung, Einzelradregelung) von Fahrzeugrädern wird der Bremsdruck jedes Rades unabhängig von dem Drehverhalten der übrigen Räder geregelt. Mit dieser Vorgehensweise sind zwar geringe Bremswege erreichbar, aber beispielsweise auf Fahrbahnen mit seitenweise geteilter Reibsituation (μ-Split) kann ein Giermoment um eine Fahrzeughochachse entstehen, dessen Ausgleich vom Fahrzeugführer aktives Gegenlenken erfordert, um eine unerwünschte Fahrtrichtungsänderung zu vermeiden. Nicht alle Fahrzeugführer sehen sich in der Lage, ein überraschend gierendes Fahrzeug in der Spur zu halten.

Um ein Giermoment infolge Bremsung bei seitenweise unterschiedlichen Kraftschlußbeibwerten zu verringern, ist eine sogenannte Giermomentaufbauverzögerung (GMA) bekannt geworden, welche an einem Vorderrad, das auf der Fahrbahnseite mit dem größeren Kraftschlußbeiwert läuft (High-Rad), zu einem zeitlich verzögerten Druckaufbau in der Radbremse führt (Fahrsicherheitssysteme, 2. Auflage 1998, Vieweg, S. 53 ff.)

Aus der DE 197 07 106 A1 geht ein System zur Ansteuerung der Bremssysteme wenigstens zweier, vorzugsweise an einer Fahrzeugachse angebrachten, Räder eines Fahrzeugs hervor, das Mittel für eine ABS-Regelung, Mittel zum Bestimmen des Fahrzustands, wie Gierrate, Vergleichsmittel und Ansteuermittel für die Radbremsen aufweist. Das System sorgt bei Erkennung von μ-Split Bedingungen während eines Bremsvorgangs und geeigneten Stabilitätskriterien für eine Aufhebung des Select-Low-Prinzips an der Hinterachse zu Gunsten einer Individualregelung mit verringerter Fahrstabilität. Hierdurch kann prinzpiell der Bremsweg verkürzt werden.

Bei Fahrzeugen mit weniger kritischem Fahrverhalten wird der Bremsdruck am High-Rad in Stufen aufgebaut, sobald das Low-Rad infolge einer Blockiertendenz einen ersten Druckabbau erfährt. Wenn der Bremdruck des High-Rades sein Blockierniveau erreicht, hat, wird er nicht mehr von den Signalen des Low-Rades beeinflußt, sondern individuell geregelt. Erst dann wird an diesem Rad die mögliche Bremskraft ausgenutzt.

Bei Fahrzeugen mit besonders kritischem Fahrverhalten (geringer Radstand, geringes Trägheitsmoment, geringe Hinterachs-Aufstandskräfte) wird nach einem Druckabbau und nachfolgendem Druckaufbau am Low-Rad auch ein Druckaufbau am High-Rad vorgenommen, wobei die Druckaufbaupausenzeiten um einen bestimmten Faktor länger sind, als beim Low-Rad.

Die bekannte Giermomentenaufbauverzögerung (GMA) erfordert eine aufwändige Anpassung an das betreffende Fahrzeug, um einen Kompromiß zwischen Lenkverhalten und Bremsweg zu erreichen. Die GMA ist mit dem Nachteil behaftet, daß das Bremspotential nicht vollständig ausgeschöpft wird. Denn das High-Rad wird pauschal stark unterbremst.

Aus der DE 42 08 141 C2 ist ein Antiblockierregelsystem für Kraftfahrzeuge bekannt, welches Signale einer Giersensorik verarbeitet. Das bekannte ABS-System ermittelt die Gierwinkelbeschleunigung des Fahrzeugs und paßt das Schlupfverhältnis zwischen linken und rechten Rädern so an, daß die Gierwinkelbeschleunigung verringert wird. Das System ist verbesserungswürdig, weil nicht alle Fahrsituationen berücksichtigt werden.

Es ist eine Aufgabe der vorliegenden Erfindung, die Nachteile des Standes der Technik zu vermeiden. Das Bremspotential der Fahrzeugräder, insbesondere des High-Rades soll besser ausgenutzt werden.

Diese Aufgabe wird erfindungsgemäß mit den Merkmalen des Patentanspruch 1 gelöst. Es wird das Raddrehverhalten gemessen und zur Ermittlung des Radschlupfs und zur Bremsdruckmodulation herangezogen, wobei die Fahrstabilität unter Verwendung wenigstens eines Lenkwinkelsensors zur Messung eines Lenkwunschs und unter Verwendung wenigstens eines Drehratensensors zur Messung des Fahrzeuggierverhaltens bestimmt und anhand einer Kenngröße $\Theta$ bewertet wird, die zur qualitativen und zur quantitativen Beurteilung einer Abweichung zwischen Istgierrate $\omega_{isi}$ und Wunschgierrate $\omega_{Lw}$ unter Verwendung der gemessenen Istgierrate $\omega_{isi}$, und unter Verwendung einer gemessenen Wunschgierrate $\omega_{LW}$ und unter Verwendung der zeitlichen Ableitung der Differenz zwischen Istgierrate $\omega_{ist}$ und Wunschgierrate $\omega_{LW}$ ermittelt wird.

Vorteile der Erfindung

Erfindungsgemäß wird zur Giermomentenbeeinflussung die Druckmodulation insbesondere während einem ABS-Regeleingriff in Abhängigkeit von einer die Fahrstabilität charakterisierenden Kenngröße $\Theta$ vorgenommen. Eine Berücksichtigung der Kenngröße im Teilbremsbereich - außerhalb von ABS-Regelzyklen - ist möglich.

Die Erfindung ermöglicht eine adaptive Gestaltung der Antiblokkier-Druckmodulation mit Giermomentenbeeinflussung in Abhängigkeit von dem Grad der Instabilität. Der zur Verfügung stehende Kraftschlußbeiwert wird besser ausgenutzt weil nach eir Druckabbau keine pauschal, um einen bestimmten Koeffizienten, vergrößerte Druckaufbaupausenzeiten an dem High-Rad vorgesehen werden. Es erfolgt bei geringen Bremswegen eine effektive Giermomentenbeeinflussung.

Weitere Einzelheiten der Erfindung gehen aus Unteransprüchen im Zusammenhang mit der Beschreibung und der beigefügten Zeichnung hervor. In der Zeichnung zeigt:

Zeichnung

Fig. 1 ein Flußdiagramm einer Ausführungsform der Erfindung,

Fig. 2 Signalverläufe $\omega_{ist}$, $\omega_{LW}$, $\Delta\omega$, $\Delta\dot{\omega}$ und Kenngröße $\Theta$ in Abhängigkeit von der Zeit t,

Fig. 3 Signalverläufe $\omega_{ist}$, $\omega_{LW}$, $\Delta\omega$, $\Delta\dot{\omega}$, Kenngröße $\Theta$ sowie druckverläufe $p_{VL}$, $P_{VR}$ jeweils in Abhängigkeit von der Zeit t, und

Fig. 4 eine maximal zulässige Druckdifferenz an Radbremsen der Vorderachse in Abhängigkeit von einer Gierrate $\omega_{ist}$.

Beschreibung eines Ausführungsbeispiels

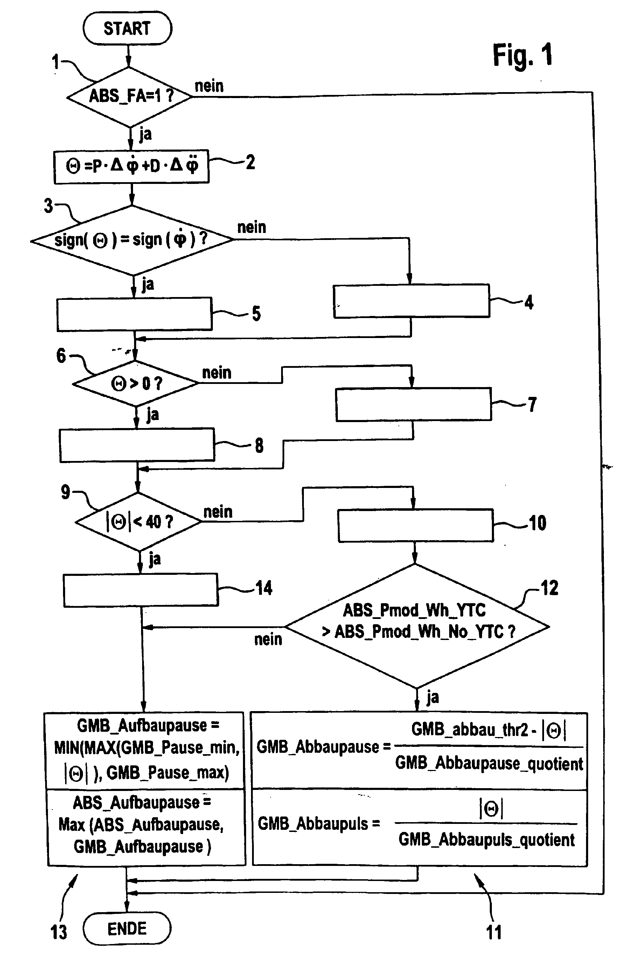

Nachfolgend wird der Verfahrensablauf anhand eines Flußdiagramms gemäß Fig. 1 schematisch erläutert. Der Vorgang beginnt, wenn gemäß einem bei 1 genannten Kriterium (ABS_FA=1) an wenigstens einem Rad der Fahrzeugvorderachse ein ABS-Regeleingriff aktiv ist. Wenn dies nicht zutrifft, wird die Prozedur abgebrochen. Gemäß 2 wird die Kenngröße $\Theta$ - nachfolgend auch Stabilitätsindex genannt - gebildet. In die Kenngröße $\Theta$ geht sowohl die Gierratenabweichung $\Delta\omega$ als auch die Beschleunigungsabweichung $\Delta\dot{\omega}$ (zeitliche Ableitung der Gieratenabweichung) ein.

Ein Vergleich 3 der Vorzeichen von Kenngröße $\Theta$ und Gierratenabweichung $\Delta\omega$ lässt erkennen, ob bei ungleichen Vorzeichen eine (ggf. vom Fahrer noch beherrschbare) Untersteuertendenz 4 vorliegt, die durch Druckaufbaumodifikation 13 bekämpfbar ist, oder ob bei übereinstimmenden Vorzeichen eine kritischere Obersteuertendenz 5 des Fahrzeugs vorliegt, welche eine Druckabbaumodifikation 11 erfordert.

In einem nachfolgenden Schritt 6 (Fig. 1) wird anhand der Kenngröße $\Theta$ (Stabilitätsindex) das Rad der Vorderachse festgelegt, an dem eine Giermomentenbeeinflussung vorgenommen wird. Für $\Theta < 0$ erfolgt ein Eingriff an dem rechten Vorderrad 7, während für $\Theta > 0$ ein Eingriff an dem linken Vorderrad 8 eingeleitet wird. Bei 9 wird der Betrag der Kenngröße $\Theta$ als Schwelle herangezogen, um die Stabilität des aktuellen Fahrzustands zu kennzeichnen. Gemäß dem vorliegenden Ausführungsbeispiel liegt für Kenngrößen $\Theta > 40$ ein instabiler Fahrzustand 10 vor, welcher Druckabbaumodifikationen 11 an dem identifizierten Hochreibwert-Vorderrad erfordert. Das Fahrzeug (d.h. $|\Theta|$>Ysens_pdec_thr1 = 40). Das Fahrzeug kann für $\Theta > 40$ nicht durch Druckaufbaumodifikation stabilisiert werden. In dieser Phase wird an einem Vorderrad eine stabilisierende Druckabbaumodifikation 11 vorgenommen.

Bei instabilem Fahrzeug wird die Dauer eines Druckabbaupuls (GMB_Abbaupuls oder auch PDEC_PULSE) und die Dauer einer Druckabbaupause (GMB_Abbaupause oder auch PDEC_PAUSE) zwischen benachbarten Druckabbaupulsen folgendermaßen berechnet:

$$PDEC\_PULSE = \frac{|\Theta|}{Ysens\_pdec\_pulse\_quotient\,(8)}$$

$$PDEC\_PAUSE = \frac{Ysens\_pdec\_thr2 - |\Theta|}{Ysens\_pdec\_pause\_quotient\,(8)}$$

In den obigen Gleichungen ist die Kenngröße $\Theta$ variabel, während die übrigen Größen feststehen. Die Einsteuerung der ermittelten Dauer forciert den Druckabbau am Hochreibwertrad und reduziert dadurch unerwünschte Giertendenzen. Eine GMB-Abbaupause (Min(GMB_Abbaupause)) ist mindestens 5 Loop lang. Diese Mindestabbauzeit ist notwendig, um die Reaktion des Fahrzeugs auf den gegebenen Puls zu erhalten. Befindet sich das Fahrzeug wieder im stabilen Bereich, so kann eine Druckaufbaumodifikation 13 vorgenommen werden, um die Bremsleistung zu verbessern.

Aus Plausibilitätsgründen wird eine Druckabbaumodifikation nur vorgenommen, wenn ein Vergleich 12 ergibt, daß der auf Basis eines Druckmodells aus radindividuellen Schlupfwerten ermittelte Radbremsdruck an dem für die Giermomentenbeeinflussung vorgesehenen Fahrzeugrad größer ist, als der ermittelte Radbremsdruck (Modelldruck) an dem gegenüberliegenden Fahrzeugrad. Wenn diese Plausibilitätsbedingung nicht erfüllt ist, wird in eine Druckaufbaumodifikation 13 gewechselt, die generell bei stabilem Fahrzeug 14 vorgesehen ist. Innerhalb der Druckaufbaumodifikation 13 wird unabhängig voneinander eine Aufbaupause (ABS_Aufbaupause) auf Grundlage des Druckmodells unter Berücksichtigung des Radschlupfzustands, sowie eine Aufbaupause (GMB_Aufbaupause) auf Grundlage der Giermomentenbeeinflussung unter Berücksichtigung des Kennwertes Θ ermittelt. Die ermittelten Pausenzeiten werden verglichen, und die längere Pausenzeit wird eingesteuert. Die minimal eingesteuerte Aufbaupause (GMB_Aufbaupause_ min) beträgt grundsätzlich etwa 2-3 Loop, das heißt je nach interner Taktzeit zwischen etwa 14-30 ms. Nur zu Beginn der Regelung wird bei großen Gierraten (>10˚/s) eine Mindestpause von 7 Loop eingestellt. Diese besondere Mindestpause soll in Kurven von Anfang an höhere Stabilität gewährleisten. Der Algorithmus endet nach der Ermittlung der notwendigen Druckmodifikation, und es erfolgt ggf. eine erneute Berechnungsschleife.

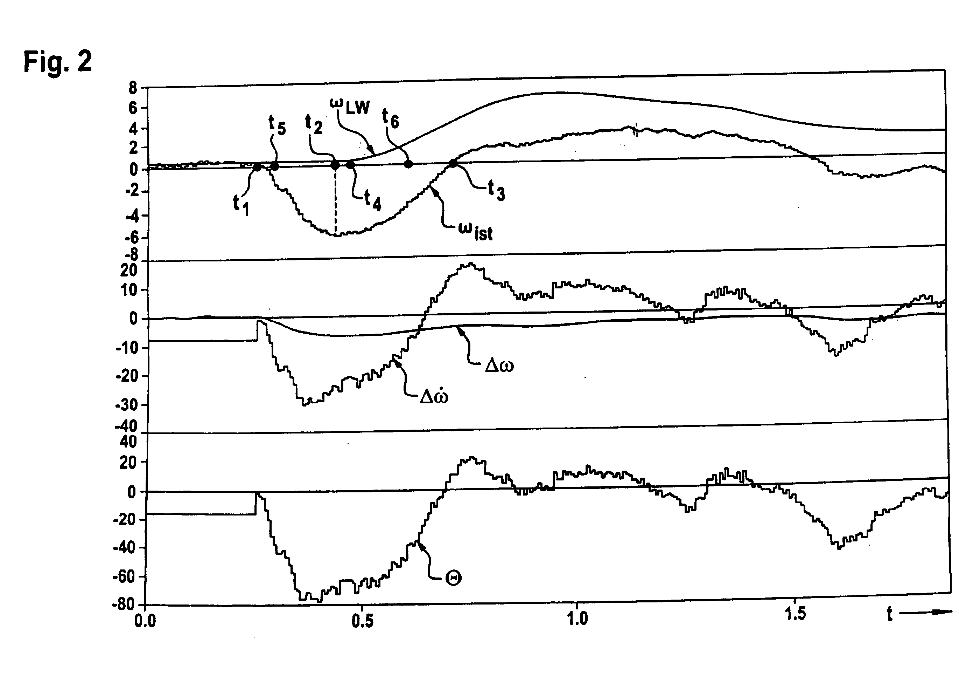

Die Fig. 2 verdeutlicht Fahrzeuginstabilität infolge eines Bremsvorgangs anhand von Signalverläufen. Im oberen Teil ist eine am Lenkrad gemessene Wunschgierrate $\omega_{LW}$ im Verhältnis zur gemessenen Istgierrate $\omega_{ist}$ dargestellt. Zum Zeitpunkt $t_1$ wird das Fahrzeug instabil und zeigt Giertendenz (bricht aus). Wie zu ersehen ist, geschieht dies unabhängig von dem Fahrerwillen ($\omega_{LW}$), weil keine Lenkwinkeländerung eingesteuert wird. Bis zum Zeitpunkt $t_2$ steigt die Gierrate $\omega_{ist}$ an, um bis zum Zeitpunkt $t_3$ infolge eines zum Zeitpunkt $t_4$ eingeleiteten Gegenlenkens abzufallen. Ab $t_4$ ändert das Fahrzeug die Gierrichtung. Der mittlere Teil der Fig. 2 verdeutlicht die Abweichung zwischen Istgierrate $\omega_{ist}$ und Wunschgierrate $\omega_{LW}$ (mit anderen Worten die Gierratenabweichung $\Delta\omega$) sowie die zeitliche Ableitung dieser Abweichung (Beschleunigungsabweichung $\Delta\dot{\omega}$). Die Kennwertbildung beruht im wesentlichen auf geometrischer Addition. Der untere Teil der Fig. 2 zeigt exemplarisch eine aus den Meßwerten ermittelte Kenngröße (Stabilitätsindex) Θ, welche die Gieratenabweichung $\Delta\omega$ und die Beschleunigungsabweichung $\Delta\dot{\omega}$ anhand der fahrzeugspezifisch einstellbaren Koeffizienten P und D gewichtet. Dadurch wird ein PD-Regler gebildet, und die Kenngröße Θ kann zur Stabilisierung herangezogen werden. Nur in dem Zeitraum zwischen $t_5$ und $t_6$ gilt das Fahrzeug als instabil, weil die Kenngröße Θ den Wert 40 überschreitet.

Grundsätzlich unterscheidet man abhängig vom ABS- Regelungszustand des Fahrzeuges innerhalb der Giermomentenbeeinflussung (GMB) verschiedene Szenarien mit Druckaufbauphasen und Druckabbauphasen unterschieden.

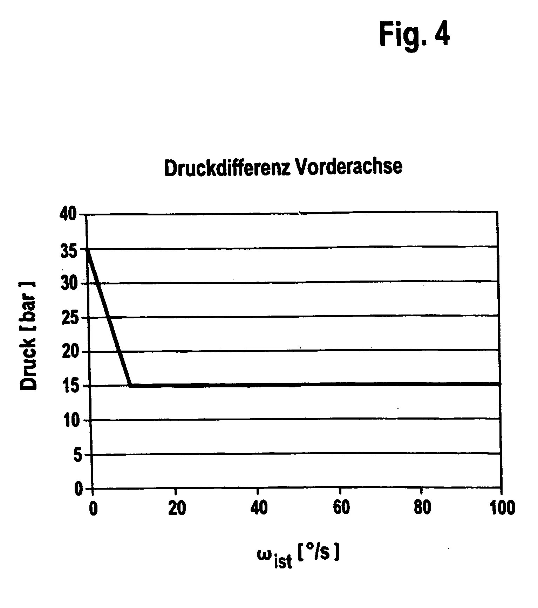

Bei einseitiger ABS- Regelung werden asymmetrische Reibwertunterschiede angenommen, durch die unterschiedliche Bremskräfte abgesetzt werden können. Die unterschiedlichen Kräfte induzieren ein Giermoment um die Hochachse. Auf die Instabilität wird mit hoher Sensibilität reagiert, um dem Fahrer die Möglichkeit zu geben, durch leichte Lenkmanöver zu reagieren. Zunächst gelangt das Low-Rad in die ABS-Regelung. Das Fahrzeug durchläuft zunächst eine erste stabilisierende Phase. Innerhalb dieser Phase wird durch das Einstellen einer bestimmten Druckdifferenz an der Vorderachse, abhängig vom "Ist"- Gierratenniveau, und wenn die die Ausbildung einer ersten, kritischen Gierratenamplitude verhindert. In der Fig. 4 ist die maximal zulässige Druckdifferenz in Abhängigkeit von der Ist-Gierrate (Ysens_fpd_press_diff) unter der Bedingung dargestellt, daß $\dot{\omega}$ einen Absolutwert von 6˚/s$^2$ überschreitet. Mit steigender Gierrate $\omega$ bis zu etwa 10 ˚/s, erfolgt eine lineare Verringerung der maximal zulässigen Druckdifferenz an der Vorderachse. Ab etwa 10˚/s bleibt die zulässige Druckdifferenz konstant mit etwa 15 bar, wobei dieser Wert in Abhängigkeit von dem Fahrzeug, der gewünschten Abstimmung und auch Toleranzen überschritten oder unterschritten werden kann.

Die beschriebene Gierratenabhängigkeit berücksichtigt die stärkere Instabilitätsneigung von Fahrzeugen, die schon vor Regelungsbeginn eine Gierrate $\omega$ (beispielsweise infolge Spurwechsel oder Kurvenfahrt) aufweisen. Eine Schwingung des Fahrzeuges um die Hochachse wird durch Druckmodulation am Vorderrad der Hochreibwertseite gedämpft und die Gierratenabweichung $\Delta\omega$ angemessen erhöht. Dadurch erhält der Fahrer Gelegenheit, gegenzulenken. Am Hochreibwertrad kann die Bremskraft so lange erhöht werden, bis auch dieses Rad sein Blockierdruckniveau erreicht und in die ABS- Regelung eintritt.

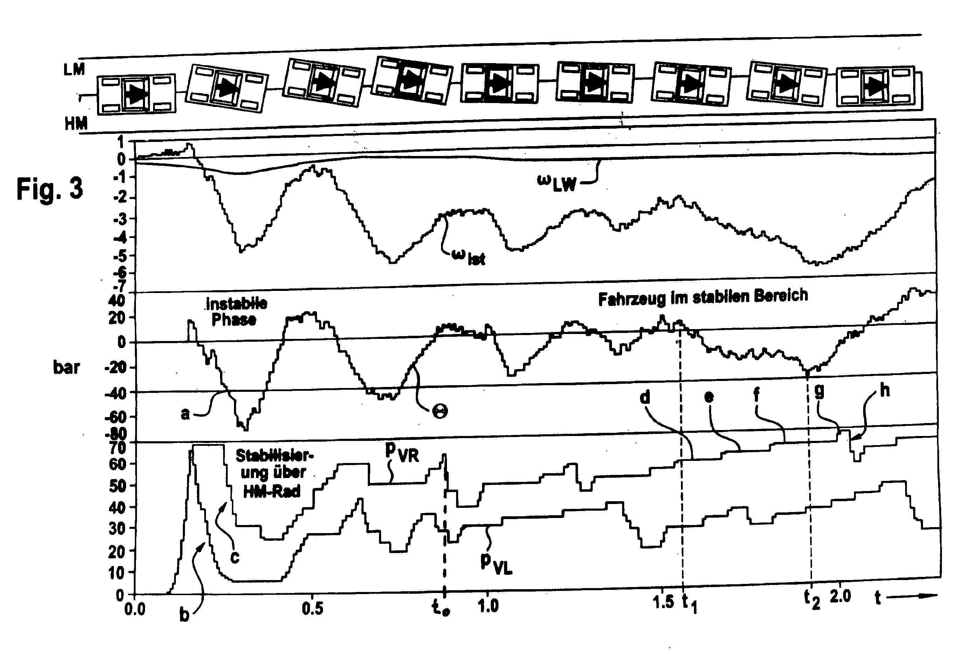

Die Fig. 3 verdeutlicht anhand eines anfangs einseitigen ABS-Regeleingriffs infolge Niedrigreibwert am linken Vorderrad die erfindungsgemäße Giermomentenbeeinflussung anhand der Verläufe von Wunschgierrate $\omega_{LW}$, Istgierrate $\omega_{ist}$, Kenngröße Θ sowie der zugehörigen Druckverläufe an dem High-Rad $p_{VR}$ und dem Low-Rad $p_{Vl}$. Weil das Vorzeichen der Kenngröße Θ im Punkt a negativ ist, wird die GMB an dem rechten Vorderrad (High-Rad) mit einem Druckabbau aktiv. Wie die Druckverläufe erkennen lassen, werden an dem Low-Rad radschlupfbedingte Druckabbauzyklen b eingesteuert. Zum Abbau der entstehenden Druckdifferenz werden an dem High-Rad Druckabbauzyklen c vorgenommen. Dieser Druckabbau berücksichtigt die Istgierrate $\omega_{ist}$, wie dies aus Fig. 4 hervorgeht. Die nachfolgenden Druckaufbau- und Druckabbauzyklen gehen auf ein Zusammenwirken von Kennwert und Schlupfschwellen zurück. Zum Zeitpunkt $t_0$ befinden sich beide Räder der Vorderachse in der ABS-Regelung.

Ein absinkender Kennwert $\Theta$ zwischen den Zeitpunkten $t_1$ und $t_2$ verdeutlicht eine gewissermaßen schleichende Instabilitätstendenz des Fahrzeugs. Auf diesen Zustand wird erfindungsgemäß innerhalb der GMB mit Variation (Verlängerung) der Druckaufbaupausen d, e und f am High-Rad reagiert. Wenn der Kennwert $\Theta$ zum Zeitpunkt $t_2$ sein Minimum erreicht, liegt ersichtlich eine besonders lange Druckaufbaupause f vor. Nach einem weiteren Druckaufbau g schließt sich dann ein im wesentlichen radschlupfbedingter Druckabbau h an. Im übrigen lassen die Druckverläufe $P_{VR}$ und $p_{VL}$ die im Verlauf der ABS-Regelzyklen wachsende Druckdifferenz zwischen den beiden Radbremsen der Vorderachse erkennen, die eine verbesserte Bremswirkung erlaubt.

Die vorliegende Erfindung erlaubt die Erkennung von stabilen und instabilen Phasen wesentlich sicherer, da der Gierratensensor und der Lenkwinkelsensor Signale liefern, anhand derer ein präziser Soll-Ist-Abgleich möglich ist.

Es sind kürzere Bremswege auf $\mu$-split Fahrbahnen realisierbar, da die stabile Phasen innerhalb des ABS besser ausgenutzt werden. Ein weiterer Vorteil ist der Stabilitätsgewinn bei Kurvenbremsungen, da durch Druckmodulation an den kurveninneren Rädern das Fahrzeug die Spurtreue beibehält. Übersteuerungstendenz wird dadurch vermieden.

Sehr instabilen Situationen innerhalb einer ABS- Regelung wird vorgebeugt und ein Ausbrechen des Fahrzeuges verhindert, so dass ESP- Eingriffe innerhalb der ABS- Regelung weitgehend vermieden werden.

Die Kenngröße (Stabilitätsindex) $\Theta$ ist ein zentraler Punkt der Erfindung. Durch den aus der Gierratenabweichung $\Delta\omega$ und der Beschleunigungsabweichung $\Delta\dot{\omega}$ gebildeten Stabilitätsindex ist es innerhalb der ABS-Regelung möglich, Instabilitätstendenzen des Fahrzeuges frühzeitig zu erkennen und in Verbindung mit der beschriebenen GMB entsprechend zu reagieren. Es liegt eine geschlossene Regelung vor, im Gegensatz zu einer überlagerten ESP- Regelung, welche die ABS-Regelung jeweils kurzzeitig unterbricht.

Die Auswertungen haben gezeigt, dass der Kennwert $\Theta$ Fahrzeugzustände (Übersteuern, Untersteuern). plausibel abbildet. Dieses Ergebnis eröffnet die Möglichkeit, die Erfindung in der beschriebenen oder in abgewandelter Form für weitere Bereiche und Einsatzbedingungen von elektronischen Fahrzeugregelsystemen (z. B. ABS,ESP, ESBS,EMB), insbesondere für den Teilbremsbereich, zu verwenden. Es versteht sich, daß bei einer Adaption für den Teilbremsbereich der Schritt 1 in Fig. 1 (ABS_FA=1) nicht abgefragt wird.

Es bleibt schließlich darauf hinzuweisen, daß alle genannten Zahlenwerte exemplarisch zu verstehen sind, und daß jeweils ein oberer und ein unterer Toleranzbereich zur Anpassung an den jeweiligen Fahrzeugtyp besteht, ohne den Kern der Erfindung zu verlassen.

Bezugszeichenliste

| $\omega_{ist}$ | (Ist) Gierrate |
|---|---|
| $\omega_{LW}$ | Wunschgierrate |
| $\Delta\omega$ | Gierratenabweichung |
| $\Delta\dot{\omega}$ | (Gierraten)Beschleunigungsabweichung |
| $\Theta$ | Kennwert (Stabilitätsindex) |
| $p_{VL}. P_{VR}$ | Radbremsdruck vorne rechts, vorne links |
| t | Zeit |
| P,D | Koeffizienten |
| a | Punkt |
| b | Druckabbauzyklen |
| c,h | Druckabbauzyklen |
| d,e,f,g | Druckaufbaupausen |

| 1 | Schritt |
|---|---|
| 2 | Schritt |
| 3 | Vergleich |
| 4 | Untersteuertendenz |
| 5 | Übersteuertendenz |
| 6 | Schritt |
| 7 | rechtes Vorderrad |
| 8 | linkes Vorderrad |
| 9 | Schritt |
| 10 | instabiler Fahrzustand |
| 11 | Druckabbaumodifikation |
| 12 | Vergleich |

13 Druckaufbaumodifikation

14 stabiles Fahrzeug

**Patentansprüche**

1. Verfahren zur Verbesserung eines Blockierschutzregelungssystems zur Verbesserung der Fahrstabilität beim Einbremsen auf seitenweise unterschiedlichen Kraftschlußbeiwerten (Giermomentenbeeinflussung, GMB), bei dem das Raddrehverhalten gemessen und zur Ermittlung des Radschlupfs und zur Bremsdruckmodulation herangezogen wird, wobei die Fahrstabilität unter Verwendung wenigstens eines Lenkwinkelsignals eines Lenkwinkelsensors zur Ermittlung einer Wunschgierrate ($\omega_{LW}$) und unter Verwendung wenigstens eines Drehratensensors zur Messung einer Istgierrate ($\omega_{ist}$) bestimmt und anhand einer Kenngröße ($\Theta$) bewertet wird, die zur qualitativen und zur quantitativen Beurteilung einer Abweichung zwischen Istgierrate ($\omega_{ist}$) und Wunschgierrate ($\omega_{LW}$) unter Verwendung der gemessenen Istgierrate ($\omega_{ist}$), und unter Verwendung einer gemessenen Wunschgierrate ($\omega_{LW}$) ermittelt wird, **dadurch gekennzeichnet, dass**
die Ermittlung unter Verwendung der zeitlichen Ableitung der Abweichung ($\Delta\dot{\omega}$) zwischen Istgierrate ($\omega_{ist}$) und Wunschgierrate ($\omega_{LW}$) durchgeführt wird, dass
das Fahrverhalten anhand des Betrags der Kenngröße ($\Theta$) in einen stabilen oder in einen instabilen Bereich unterschieden wird, und angibt, wie stark das Fahrzeug übersteuert oder untersteuert, wobei bei stabilem Fahrzeug zur Druckaufbaumodifikation (13) am High-Rad eine Modifikation der Pausenzeit (GMB_Aufbaupause) zwischen jeweils benachbarten Druckaufbaupulsen vorgenommen wird, und daß bei instabilem Fahrzeug eine Druckabbaumodifikation (11) unter Modifikation der Druckabbaupulslänge (GMB_Abbaupuls) oder eine Modifikation einer Pausenzeit (GMB_Abbaupause) zwischen jeweils benachbarten Druckabbaupulsen vorgenommen wird.

2. Verfahren nach Anspruch 1, **dadurch gekennzeichnet, daß** die Kenngröße ($\Theta$) nach der Formel $\Theta = P^*\overline{\Delta\omega} + D^*\overline{\Delta\dot{\omega}}$

mit $\Delta\omega = \omega_{ist} - \omega_{LW}$ (Gierratenabweichung) und $\Delta\dot{\omega} = \dfrac{\delta}{\delta t}\Delta\omega$ (Beschleunigungsabweichung) sowie mit P, D als fahrzeugspezifische Koeffizienten ermittelt wird.

3. Verfahren nach Anspruch 2, **dadurch gekennzeichnet, daß** bei stabilem Fahrzeug an dem High-Rad eine Druckaufbaumodifikation (13) mit einer Pausenzeit (GMB_Aufbaupause) auf Grundlage der Kenngröße ($\Theta$) zur Charakterisierung der Fahrstabilität ($\Theta$) und eine Pausenzeit (ABS_Aufbaupause) auf Grundlage des Radschlupfs ermittelt wird, daß die ermittelten Pausenzeiten miteinander verglichen werden, und daß die längere der ermittelten Pausenzeiten (Max(ABS_Aufbaupause, GMB_Aufbaupause)) für die Druckmodulation am High-Rad herangezogen wird.

4. Verfahren nach Anspruch 2, **dadurch gekennzeichnet, daß** bei instabilem Fahrzeug an dem High-Rad eine Druckabbaumodifikation (11) mit einer Pausenzeit zwischen benachbarten Druckabbaupulsen (GMB_Abbaupause) und/oder eine Druckabbaupulslänge (GMB_Abbaupuls) auf Grundlage der Kenngröße ($\Theta$) ermittelt und für die Druckmodulation herangezogen wird.

5. Verfahren nach Anspruch 4, **dadurch gekennzeichnet, daß** die Pausenzeit (GMB_Abbaupause) nach der Formel GMB_Abbaupause = GMB_Abbau_thr2 - |$\Theta$| / GMB_Abbaupause_quotient ermittelt wird.

6. Verfahren nach Anspruch 4, **dadurch gekennzeichnet, daß** die Druckabbaupulslänge (GMB_Abbaupuls) nach der Formel GMB_Abbaupuls = |$\Theta$| / GMB_Abbaupuls_quotient ermittelt wird.

7. Verfahren nach einem der Ansprüche 4 bis 6, **dadurch gekennzeichnet, daß** bei instabilem Fahrzeug an dem High-Rad eine Modifikation des Druckabbaus nicht vorgenommen wird, und daß eine Modifikation des Druckaufbaus erfolgt, wenn der nach einem Druckmodell ermittelte Radbremsdruck (Pmod_Wh_YTC) an dem High-Rad geringer ist, als der nach dem Druckmodell ermittelte Radbremsdruck (Pmod_Wh_No_YTC) an dem Low-Rad.

8. Verfahren nach Anspruch 1, **dadurch gekennzeichnet, daß** für Kenngrößen ($\Theta$) $\leq$ 40 an dem High-Rad eine Druckaufbaumodulation (13) für einen stabilen Fahrzustand erfolgt, und daß für Kenngrößen ($\Theta$) etwa $\geq$ 40 eine Druckabbaumodulation (11) für einen instabilen Fahrzustand vorgenommen wird.

9. Verfahren nach einem der vorhergehenden Ansprüche, **dadurch gekennzeichnet, daß** die Richtung der Instabilität (Übersteuertendenz/Untersteuertendenz) durch Vergleich der Vorzeichen von Kenngröße (Θ) und Gierratenabweichung (Δω) ermittelt wird, und daß übereinstimmende Vorzeichen eine Übersteuertendenz signalisieren, und daß unterschiedliche Vorzeichen eine Untersteuertendenz signalisieren.

10. Verfahren nach einem der vorhergehenden Ansprüche, **dadurch gekennzeichnet, daß** das für die Giermomentenbeeinflussung vorgesehene Fahrzeugrad durch das Vorzeichen der Kenngröße (Θ) ermittelt wird, und daß ein positives Vorzeichen eine Giermomentenbeeinflussung am linken Vorderrad (VL) bewirkt, und daß ein negatives Vorzeichen eine Giermomentenbeeinflussung am rechten Vorderrad (VR) bewirkt.

**Claims**

1. Method for improving an anti-lock braking control system for improving the driving stability when braking on values of the coefficient of adhesion which are different on different sides (means of influencing the yaw moment, GMB), in which the wheel rotational behaviour is measured and is used to determine the wheel slip and to modulate the brake pressure, wherein the driving stability is determined using at least one steering angle signal of a steering angle sensor for determining a desired yaw rate ($\omega_{LW}$) and using at least one rotational rate sensor to measure an actual yaw rate ($\omega_{act}$), and is evaluated on the basis of a characteristic variable (Θ) which is determined for qualitatively and quantatively assessing a deviation between an actual yaw rate ($\omega_{act}$) and the desired yaw rate ($\omega_{LW}$) using the measured actual yaw rate ($\omega_{act}$) and using a measured desired yaw rate ($\omega_{LW}$),
**characterized in that**
the determination is carried out using the derivative over time of the deviation ($\Delta\dot\omega$) between the actual yaw rate ($\omega_{act}$) and the desired yaw rate ($\omega_{LW}$), **in that** the driving behaviour is differentiated on the basis of the absolute value of the characteristic variable (Θ) in a stable range or in an unstable range and indicates to what extent the vehicle is oversteering or understeering wherein in the case of a stable vehicle modification of the pause time (GMB_ build-up pause) between respectively adjacent pressure build-up pulses are performed at the high wheel for the purpose of modification (13) of the build-up of pressure, and **in that** in the case of an unstable vehicle a modification (11) of the decrease in pressure is performed for modifying the pressure decrease pulse length (GMB_decrease pulse) or modifying a pause time (GMB_decrease pause) between respectively adjacent pressure decrease pulses.

2. Method according to Claim 1, **characterized in that** the characteristic variable (Θ) is determined according to the

formula Θ=$P^*\Delta\omega$+$D^*\Delta\dot\omega$ where $\Delta\omega=\omega_{act}$-$\omega_{LW}$ (yaw rate deviation) and $\overset{\bullet}{\Delta\omega} = \dfrac{\delta}{\delta t}\Delta\omega$ (acceleration deviation) and

with P, D as vehicle-specific coeffients.

3. Method according to Claim 2, **characterized in that** in the case of a stable vehicle a modification (13) of the build-up of pressure at the high wheel with a pause time (GMB_build-up pause) is determined on the basis of the characteristic variable (Θ) for characterizing the driving stability (Θ), and a pause time (ABS_build-up pause) is determined on the basis of the wheel slip, **in that** the pause times which are determined are compared with one another, and **in that** the longer of the determined pause times (Max(ABS_build-up pause, GMB_build-up pasue)) is used for modulating the pressure at the high wheel.

4. Method according to Claim 2, **characterized in that** in the case of an unstable vehicle a modification (11) of the decrease in pressure at the high wheel with a pause time between adjacent pressure decrease pulse (GMB_ decrease pause) and/or a pressure decrease pulse length (GMB_decrease pulse) is determined on the basis of the characteristic variable (Θ) and is used for the pressure modulation.

5. Method according to Claim 4, **characterized in that** the pause time (GMB_decrease pause) is determined according to the fomula GMB_decrease pause = GMB_decrease_thr2-|Θ|/GMB_decrease pause_quotient.

6. Method according to claim 4, **characterized in that** the pressure decrease pulse length (GMB_decrease pulse) is determined according to the formula GMB_decrease pulse = |Θ|/GMB_decrease pulse_quotient.

7. Method according to one of Claims 4 to 6, **characterized in that** in the case of an unstable vehicle a modification of the decrease in pressure is not performed at the high wheel and **in that** a modification of the pressure build-up takes place if the wheel brake pressure (Pmod_Wh_YTC) which is determined according to a pressure model is lower at the high wheel than the wheel brake pressure (Pmod_Wh_No_YTC) which is determined according to the pressure model at the low wheel.

8.  Method according to Claim 1, **characterized in that** for characteristic variables ($\Theta$) $\leq$ 40 a modulation (13) of the build-up of pressure for a stable driving state takes place at the high wheel, and **in that** for characteristic variables ($\Theta$) approximately $\geq$ 40 a modulation (11) of the decrease in pressure for an unstable driving state is performed.

9.  Method according to one of the preceding claims **characterized in that** the direction of the instability (tendency to oversteer/tendency to understeer) is determined by comparing the signs of the characteristic variable ($\Theta$) and the yaw rate deviation ($\Delta\omega$), and **in that** corresponding signs signal a tendency to oversteer, and **in that** different signs signal a tendency to understeer.

10. Method according to one of the preceding claims, **characterized in that** the vehicle wheel which is provided for influencing the yaw moment is determined by the sign of the characteristic variable ($\Theta$), and **in that** a positive sign causes the yaw moment at the lefthand front wheel (VL) to be influenced, and **in that** a negative sign causes the yaw moment at the right-hand front wheel (VR) to be influenced.

**Revendications**

1.  Procédé pour l'amélioration d'un système de commande antiblocage destiné à améliorer la stabilité de conduite lors du freinage pour des valeurs des coefficients d'adhérence qui diffèrent de chaque côté (effet du moment de lacet, GMB pour Giermomentenbeeinflussung), dans lequel le comportement de rotation des roues est mesuré et utilisé pour déterminer le patinage des roues et la modulation de la pression de freinage, dans lequel la stabilité de conduite est évaluée en utilisant au moins un signal d'angle de braquage d'un capteur d'angle de braquage pour déterminer un taux de lacet souhaité ($\omega_{LW}$) et en utilisant au moins un capteur de vitesse angulaire pour mesurer un taux de lacet réel ($\omega_{ist}$) et sur la base d'un paramètre ($\Theta$) qui est déterminé pour l'évaluation qualitative et quantitative d'un écart entre le taux de lacet réel ($\omega_{ist}$) et le taux de lacet souhaité ($\omega_{LW}$) en utilisant le taux de lacet réel ($\omega_{ist}$) mesuré et en utilisant un taux de lacet souhaité ($\omega_{LW}$) mesuré, **caractérisé en ce que** la détermination est effectuée en utilisant la dérivée temporelle de l'écart ($\Delta\dot\omega$) entre le taux de lacet réel ($\omega_{ist}$) et le taux de lacet souhaité ($\omega_{LW}$), **en ce que** le comportement de conduite se distingue sur la base de la valeur du paramètre ($\Theta$) dans une région stable ou dans une région instable, et fournit le degré de survirage ou de sous-virage, dans lequel, lorsque le véhicule est stable, une modification du temps de pause (GMB_Aufbaupause, pause_augmentation_GMB) entre des impulsions d'augmentation de pression est effectuée pour la modification d'augmentation de pression (13) aux vitesses de rotation élevées, et **en ce que**, lorsque le véhicule est instable, une modification de l'augmentation de pression (11) est effectuée par modification de la longueur de l'impulsion de réduction de pression (GMB_Abbaupuls, Impulsion_rêduction_GMB) ou par modification d'un temps de pause (GMB_Abbaupause, Pause_réduction_GMB) entre des impulsions de réduction de pression mutuellement voisines.

2.  Procédé selon la revendication 1, **caractérisé en ce que** le paramètre ($\Theta$) est déterminé conformément à la formule

    $\Theta$=P*$\Delta\overline{\omega}$+D*$\Delta\overline{\dot\omega}$, avec $\Delta\omega$=$\omega_{ist}$-$\omega_{LW}$ (écart de taux de lacet) et $\Delta\dot\omega = \dfrac{\delta}{\delta t}\Delta\omega$ (écart d'accélération), et où P, D sont des coefficients spécifiques du véhicule.

3.  Procédé selon la revendication 2, **caractérisé en ce que**, lorsque le véhicule est stable aux vitesses de rotation élevées, une modification de l'augmentation de pression (13) est déterminée avec un temps de pause (GMB_Aufbaupause) sur la base du paramètre ($\Theta$) pour caractériser la stabilité de conduite ($\Theta$) et avec un temps de pause (ABS_Aufbaupause, Pause_augmentation_ABS) sur la base du patinage des roues, **en ce que** les temps de pause déterminés sont comparés l'un à l'autre, et **en ce que** le plus long des temps de pause déterminés (Max(ABS_Aufbaupause, GMB_Aufbaupause)) est utilisé pour la modulation de pression aux vitesses de rotation élevées.

4.  Procédé selon la revendication 2, **caractérisé en ce que**, lorsque le véhicule est instable aux vitesses de rotation élevées, une modification de réduction de pression (11) est déterminée avec un temps de pause entre des impulsions de réduction de pression voisines (GMB_Abbaupause) et/ou avec une longueur d'impulsion de réduction de pression (GMB_Abbaupuls, Impulsion_réduction_GMB) sur la base du paramètre ($\Theta$) et est utilisée pour la modulation de pression.

**5.** Procédé selon la revendication 4, **caractérisé en ce que** le temps de pause (GMB_Abbaupause ou Pause_réduction_GMB) est déterminé selon la formule Pause_réduction_GMB = Rêduction_GMB_thr2 - |Θ| / Quotient_pause_réduction_GMB.

**6.** Procédé selon la revendication 4, **caractérisé en ce que** la longueur de l'impulsion de réduction de pression (GMB_Abbaupuls, Impulsion_réduction_GMB) est déterminée selon la formule Impulsion_réduction_GMB = |Θ| / Quotient_impulsion_réduction_GMB.

**7.** Procédé selon l'une des revendications 4 à 6, **caractérisé en ce que**, lorsque le véhicule est instable aux vitesses de rotation élevées, une modification de la réduction de pression n'est pas effectuée, et **en ce qu'**une modification de la réduction de pression se produit lorsque la pression de freinage des roues déterminée conformément à un modèle de pression (Pmod_Wh_YTC) est plus faible aux vitesses de rotation élevées que la pression de freinage des roues (Pmod_Wh_No_YTC) déterminée conformément au modèle de pression aux faibles vitesses de rotation.

**8.** Procédé selon la revendication 1, **caractérisé en ce que**, pour des paramètres (Θ) ≤ 40 aux vitesses de rotation élevées, une modulation de l'augmentation de pression (13) se produit pour un état de conduite stable, et **en ce que**, pour des paramètres (Θ) approximativement ≥ 40, une modulation de réduction de pression (11) est effectuée pour un état de conduite instable.

**9.** Procédé selon l'une des revendications précédentes, **caractérisé en ce que** la direction de l'instabilité (tendance au survirage/tendance au sous-virage) est déterminée par comparaison des signes du paramètre (Θ) et de l'écart de taux de lacet (Δω) et **en ce que** des signes identiques signalent une tendance au survirage et **en ce que** des signes différents signalent une tendance au sous-virage.

**10.** Procédé selon l'une des revendications précédentes, **caractérisé en ce que** la roue de véhicule prévue pour produire un effet sur le moment de lacet est déterminée à partir du signe du paramètre (Θ), **en ce qu'**un signe positif produit un effet de moment de lacet sur la roue avant gauche (VL), et **en ce qu'**un signe négatif produit un effet de moment de lacet sur la roue avant droite (VR).

**Fig. 1**

START

1 — ABS_FA=1 ?  —— nein

ja

2 — $\Theta = P \cdot \Delta\dot{\varphi} + D \cdot \Delta\ddot{\varphi}$

3 — sign$(\Theta)$ = sign$(\dot{\varphi})$ ? —— nein

ja

5

4

6 — $\Theta > 0$ ? —— nein

ja

7

8

9 — $|\Theta| < 40$ ? —— nein

ja

10

14

12 — ABS_Pmod_Wh_YTC > ABS_Pmod_Wh_No_YTC ?

nein

ja

GMB_Aufbaupause = MIN(MAX(GMB_Pause_min, $|\Theta|$ ), GMB_Pause_max)

$$GMB\_Abbaupause = \frac{GMB\_abbau\_thr2 - |\Theta|}{GMB\_Abbaupause\_quotient}$$

ABS_Aufbaupause = Max (ABS_Aufbaupause, GMB_Aufbaupause )

$$GMB\_Abbaupuls = \frac{|\Theta|}{GMB\_Abbaupuls\_quotient}$$

13

ENDE

11

Fig. 2

Fig. 3

# Fig. 4

**Druckdifferenz Vorderachse**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19707106 A1

- DE 4208141 C2

**In der Beschreibung aufgeführte Nicht-Patentliteratur**

- Fahrsicherheitssysteme. 1998, 53 ff